# EUROPÄISCHE PATENTSCHRIFT

(11) **EP 1 582 890 B1**
(45) Veröffentlichungstag und Bekanntmachung des Hinweises auf die Patenterteilung: **10.09.2008**
(21) Anmeldenummer: 05002019.7
(22) Anmeldetag: 01.02.2005
(51) Int. Cl.: G01S 13/26, G01S 7/282, G01S 7/288

(54) **Linear frequenzmoduliertes Impulsradar**
Pulse radar with linear frequency modulation
Radar à impulsions, à modulation de fréquence linéaire

(30) Priorität: 31.03.2004 DE 102004015648
(43) Veröffentlichungstag der Anmeldung: 05.10.2005
(73) Patentinhaber: EADS Deutschland GmbH, 85521 Ottobrunn (DE)
(72) Erfinder: Flacke, Joachim, 88677 Markdorf (DE)
(74) Vertreter: Meel, Thomas

(56) Entgegenhaltungen:
- EP-A- 0 403 085
- WO-A-20/04005961
- DE-C1- 4 002 857
- US-A- 5 245 347
- US-A- 5 351 053
- US-A1- 2003 048 214
- US-A1- 2003 117 311

## Beschreibung

Die Erfindung betrifft ein linear frequenzmoduliertes Impulsradar, bei dem das Echosignal zur Reduzierung der Bandbreite mit einem Deramp-Signal abgemischt wird.

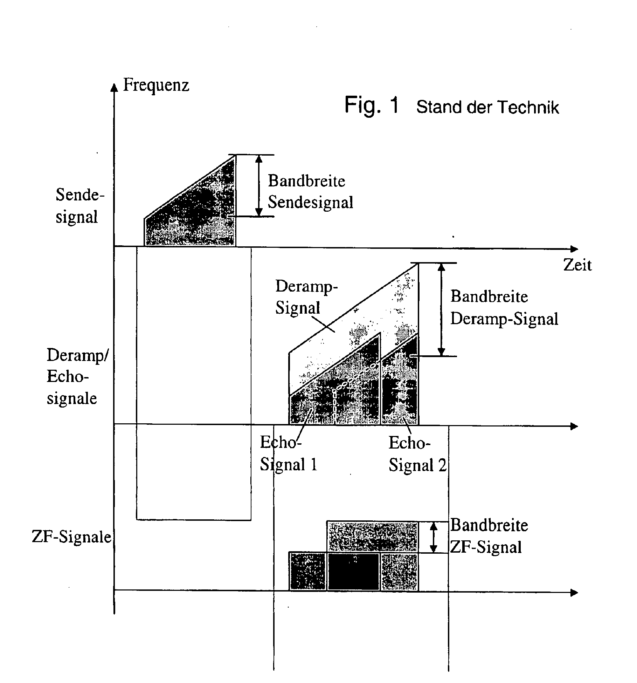

Das Deramping-Verfahren (in der Fachliteratur oft auch als Dechirp-Verfahren bezeichnet) wird üblicherweise in breitbandigen Impuls-Radarsystemen mit linearer Frequenzmodulation (Chirp-Signal) eingesetzt, um die Bandbreite des Echosignals in der ZF-Ebene zu reduzieren (beschrieben in Carrara, Goodman, Majewski: 'Spotlight Synthetic Aperture Radar', Artech House, 1995, Seiten 26-31). Es ist zur Veranschaulichung in Fig. 1 dargestellt. Bei der Anwendung des Deramping-Verfahrens wird ein Deramp-Signal erzeugt, das die gleiche Chirp-Rate (erzeugte Bandbreite pro Zeiteinheit - entspricht der Steigung im Frequenz-Zeit-Diagramm) wie das Sendesignal aufweist, jedoch eine längere Impulsdauer aufweist und auf einer anderen Mittenfrequenz schwingt. Die Impulsdauer des Deramp-Signals wird so gewählt, dass die Echo-signale des gesamten Beobachtungsbereichs abgedeckt werden. Dieses Deramp-Signal wird verzögert in den ersten Abwärtsmischer als LO-Signal eingespeist. Das resultierende ZF-Signal mit einem Echosignal von einem Punktziel aus dem Beobachtungsbereich ist ein unmodulierter Impuls (Signal fester Frequenz und begrenzter Dauer), dessen Frequenz von der Differenzfrequenz zwischen Sendesignal und Derampsignal und von der Laufzeit des Echosignals abhängt. In Fig. 1 sind von den aus dem vorgegebenen Beobachtungsbereich empfangenen Echosignalen das erste (Echosignal 1) und das letzte (Echosignal 2) eingezeichnet. Bei entsprechender Justierung der Länge und der Verzögerung des Derampsignals ist die Bandbreite aller Echosignale aus dem Zielgebiet nur noch durch Sendesignalform und durch radiale Tiefe des Beobachtungsbereichs bestimmt. Wie man aus Fig. 1, unteres und oberes Diagramm, erkennt, ist die Bandbreite des mit dem Deramp-Signal abgemischten Echosignals geringer als die Bandbreite des Sendesignals.

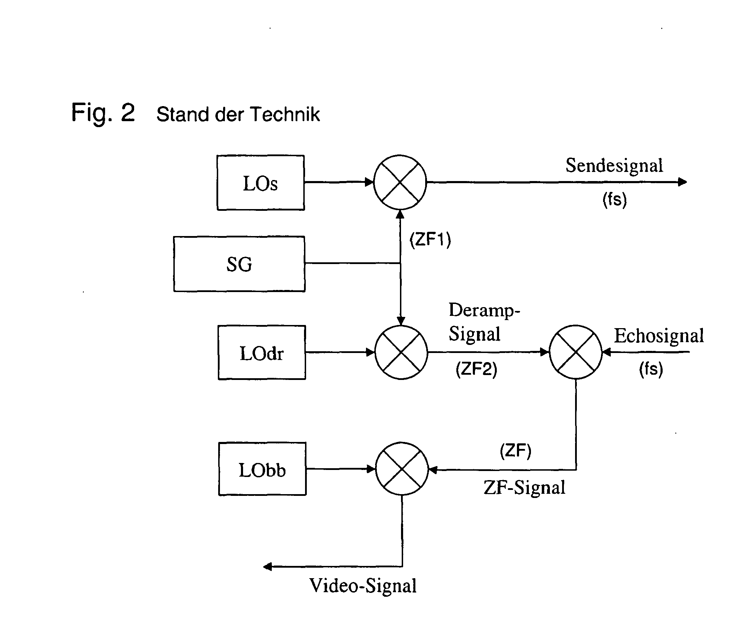

Die Generierung des Deramp-Signals geschieht gemäß dem Stand der Technik nach dem in Fig. 2 beschriebenen Aufbau.
Im Ausgang des Signalgenerators SG liegt zunächst das Sendesignal an. Dieses Signal ist üblicherweise ein Impuls mit einem linearem Frequenzanstieg innerhalb der Impulsbreite (Chirp Signal). Die Trägerfrequenz dieses Signals ist eine durch das System vorgegebene Zwischenfrequenz ZF1. Das ZF1-Sendesignal wird mittels Referenzoszillator LOs auf die Sendefrequenz fs umgesetzt (erster Frequenzaufbereitungskanal) und abgestrahlt. Die Trägerfrequenzen (Mittenfrequenzen) der frequenzmodulierten Signale sind in den Figuren an den betreffenden Leitungsabschnitten in Klammern angegeben.

Für den Empfangsfall, bei vorgegebener Lage des Beobachtungsbereiches, wird im Signalgenerator SG das Deramp-Signal mit gleicher Chirp Rate und Frequenz wie das Sendesignal erzeugt, jedoch mit größerer Impulsbreite, so dass der gesamte Beobachtungsbereich abgedeckt wird. Die Umsetzung dieses Deramp-Signals auf eine zweite Zwischenfrequenz ZF2 geschieht über den Referenzoszillator LOdr (zweiter Frequenzaufbereitungskanal).
Im Empfangsfall wird das Echosignal (Trägerfrequenz f_{S}) mit dem Deramp-Signal auf eine Empfangs-Zwischenfrequenz ZF abgemischt, die üblicherweise identisch mit ZF1 ist. Über den Referenzoszillator LObb erfolgt die Abmischung auf das Basisband. Das Basisband kann je nach Bandbreite und möglicher Abtastrate des A/D Wandlers noch einen Frequenzversatz beinhalten.

In der US 5,245,347 ist ein frequenzmoduliertes Impulsradar beschrieben. Das Sendesignal wird an einem Signalgenerator erzeugt. Das Deramp-Signal wird unabhängig davon an einem weiteren Signalgenerator erzeugt, der als wesentliche Komponente einen spannungsgesteuerten Oszillator aufweist.

In der WO 2004/005961 A1 ist ein weiteres frequenzmoduliertes Impulsradar beschrieben, wobei Sendesignal und Deramp-Signal mit demselben Referenzoszillator erzeugt werden.

Aufgabe der Erfindung ist es, ein Impulsradar mit hoher Auflösung zu schaffen, das sich durch einen geringen technischen Geräteaufwand für die Signalaufbereitung auszeichnet und das eine hohe Flexibilität im Einsatz aufweist.

Diese Aufgabe wird mit dem Gegenstand des Patentanspruch 1 gelöst. Vorteilhafte Ausführungen der Erfindung sowie ein als Frequency Step System ausgebildetes frequenzmoduliertes Radarsystem sind Gegenstand weiterer Patentansprüche.

Die Erfindung wird anhand konkreter Ausführungsbeispiele unter Bezugnahme auf Fig. näher erläutert. Es zeigen:
- Fig. 1: Frequenz-Zeitdiagramme zum Deramping-Verfahren wie in der Beschreibungseinleitung erläutert (Stand der Technik);
- Fig. 2: den Aufbau eines frequenzmodulierten Radarsystems zur Durchführung des Deramping-Verfahrens, wie in der Beschreibungseinleitung erläutert (Stand der Technik);
- Fig. 3: eine Ausführung des erfindungsgemäßen Radarsystems;
- Fig. 4: ein erfindungsgemäßes Radarsystem, ausgebildet als Frequency Step-System.

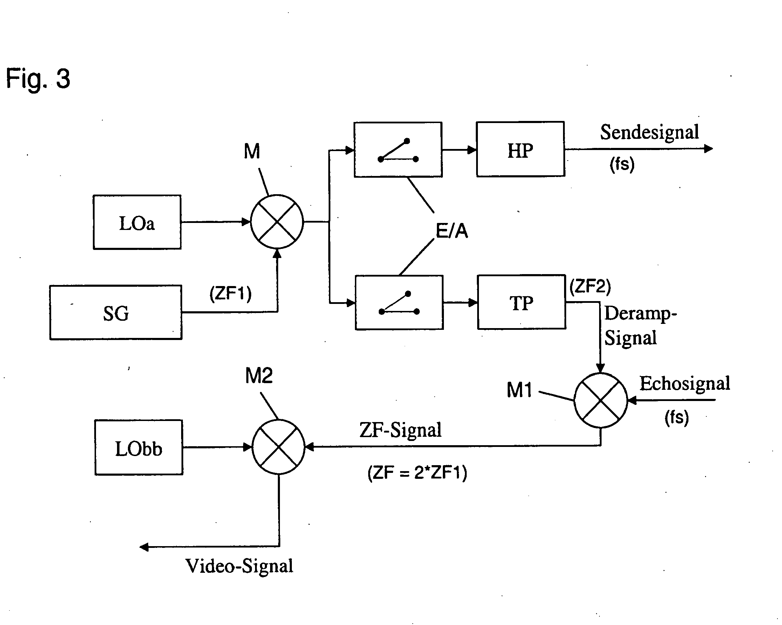

Fig. 3 zeigt eine Ausführung des erfindungsgemäßen Radarsystems.
Die Generierung von Sendesignal und Deramp-Signal im Signalgenerator SG erfolgt standardmäßig wie bei den bekannten Verfahren, allerdings mit dem Unterschied, dass der Frequenzanstieg des Deramp-Signals mit gleichem Betrag, aber umgekehrtem Vorzeichen verglichen mit dem Sendesignal erfolgt. Bei der Erzeugung von Sendesignal und Deramp-Signal in einem 'Digitalen Chirp Generator' wird die unterschiedliche Steigung der beiden Signale durch eine entsprechende Programmierung des Digitalen Chirp Generators realisiert.

Die Umsetzung des vom Signalgenerator SG erzeugten Sendesignals (Trägerfrequenz ZF1) auf die Sendefrequenz fs bzw. des Deramp-Signals auf die Frequenz ZF2 erfolgt unter Einbeziehung nur eines Referenzoszillators LO am Mischer M. Für das Sendesignal wird das obere Seitenband des Mischprozesses genutzt und für das Deramp-Signal das untere Seitenband oder umgekehrt.
Das Ausgangssignal des Mischers M wird dazu in zwei Zweige aufgeteilt. Im oberen Zweig, der hier für das Sendesignal vorgesehen ist, ist ein Hochpassfilter HP enthalten, so dass am Ausgang dieses Zweigs das obere Seitenband des Aufwärtsmischprozesses (Frequenz fs) anliegt. Im unteren Zweig, der hier für das Deramp-Signal vorgesehen ist, ist ein Tiefpassfilter TP enthalten, so dass am Ausgang dieses Zweigs das untere Seitenband des Aufwärtsmischprozesses (Frequenz ZF2) vorliegt.

Sowohl im Zweig für das obere Seitenband wie auch im Zweig für das untere Seitenband ist ein Ein/Ausschalter E/A vorgesehen. Diese dienen dazu, störende Wechselwirkungen zwischen den beiden Zweigen zu verhindern. Im Sendefall ist der Zweig für das Deramp-Signal unterbrochen. Im Empfangsfall ist der Zweig für das Sendesignal unterbrochen.

Alternativ zu der in Fig. 3 gezeigten Ausführung kann das im oberen Zweig geführte obere Seitenband auch an den Mischer M1 geführt werden, so dass es als Deramp-Signal dient. Entsprechend wird das im unteren Zweig geführte untere Seitenband in den Sendepfad des Radargeräts eingespeist, so dass es als Sendesignal dient.

Auf die beschriebene Weise kann in einem System mit einer ZF1 von z.B. 3.5 GHz mit nur einem Referenzoszillator LOa, der bei einer festen Frequenz von z.B. 13 GHz schwingt, und einem Aufwärtsmischer M ein Sendesignal im Ku- Band (Mittenfrequenz 16.5 GHz) erzeugt werden mit einem Deramp-Signal im X-Band (Mittenfrequenz 9.5 GHz) oder umgekehrt das Sendesignal im X-Band mit dem Deramp-Signal im Ku-Band. In beiden Fällen wird, wie beschrieben, nur ein Frequenzaufbereitungskanal benötigt.

Wegen des umgekehrten Frequenzanstiegs zwischen Sendesignal und Deramp-Signal weisen sowohl das obere Seitenband wie auch das untere Seitenband nach dem Mischprozess im Aufwärtsmischer M gleiche Frequenzanstiege innerhalb des Impulses auf. Die Abmischung im Empfangsfall am Mischer M1 ergibt immer ein Signal, das auf der doppelten ZF1 schwingt. Die notwendige Generierung des LO-Signals für die Abmischung auf das Basisband am Mischer M2 kann durch einfache Vervielfachung des in der Signalgenerierung verwendeten LO-Signals erfolgen.

Mit dem erfindungsgemäßen Aufbau des Radarsystems ist es somit möglich, mit einem einzelnen Frequenzaufbereitungskanal auszukommen. Deramp-Signal und Sendesignal werden mit demselben Referenzoszillator LO am selben Mischer M erzeugt.

Mit der Erfindung wird darüber hinaus ein breitbandiges Radarsystem hoher Auflösung mit auswählbaren Frequenzbändern geschaffen. Es kann zwischen zwei Frequenzbändern für Sendesignal und Echosignalverarbeitung gewählt werden, ohne die Hardware des Radarsystems ändern zu müssen.

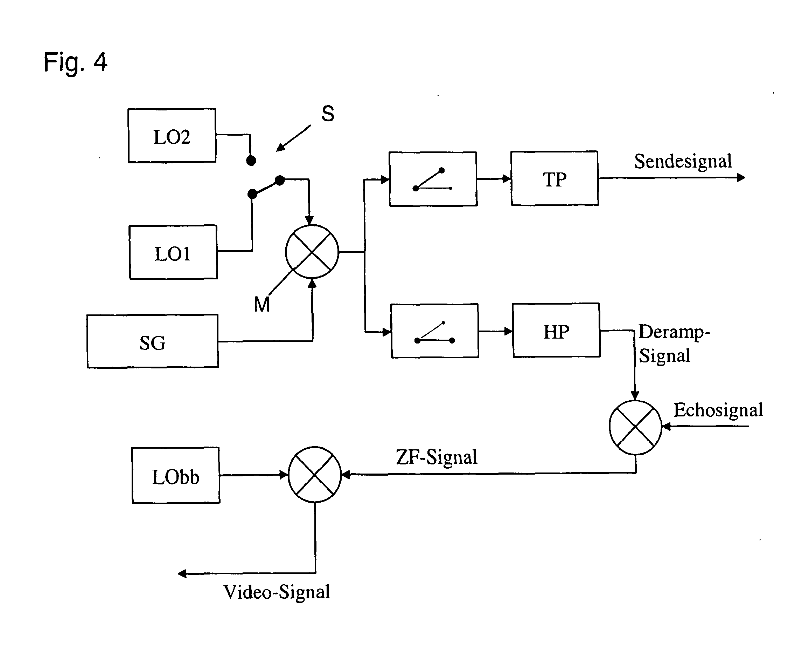

Das der Erfindung zugrunde liegende Prinzip kann auch in solchen linear frequenzmodulierten Impulsradaren eingesetzt werden, die als so genanntes Frequency Step System ausgebildet sind. Ein solches System ist beispielsweise in der US 6,531,976 B1 beschrieben. In derartigen Systemen wird die Bandbreite durch zeitversetzte Generierung von mehreren frequenzmodulierten Sendesignalen unterschiedlicher Mittenfrequenz erhöht. Zum Beispiel können zeitlich alternierend zwei Sendesignale gesendet werden, die beide die gleiche Chirprate aufweisen (gleiche Steigung in einem Frequenz-Zeit-Diagramm), wobei die Maximalfrequenz des einen Signals der Minimalfrequenz des zweiten Signals entspricht. Für jedes Sendesignal wird ein geeignetes Deramp-Signal erzeugt, so dass für jedes Sendesignal separat das oben beschriebene Deramping-Verfahren durchgeführt werden kann. Entsprechend dem der Erfindung zugrunde liegende Prinzip kann ein Sendesignal und das zugehörige Deramp-Signal als oberes und unteres Seitenband eines Aufwärtsmischungsprozesses generiert werden. Fig. 4 zeigt eine Ausführung eines solchen Frequency-Step-Radarsystems. Der Aufbau dieses Radarsystems unterscheidet sich von jenem gemäß Fig. 3 lediglich dadurch, dass anstatt einem Referenzoszillator nunmehr zwei Referenzoszillatoren LO1,LO2 vorhanden sind, die über einen Schalter S wahlweise mit dem Eingang von Mischer M verbunden werden können. Zur Generierung des ersten Sendesignals und zugehörigem Deramp-Signals ist LO1 mit dem Mischer M verbunden.
Zur Generierung des zweiten Sendesignals und zugehörigem Deramp-Signal wird der Mischer M mit dem zweiten Referenzoszillator L02 verbunden.

## Patentansprüche

1. Linear frequenzmoduliertes Impulsradar, bei dem das Echosignal zur Reduzierung der Bandbreite in der ZF-Ebene gegenüber dem Sendesignal mit einem Deramp-Signal abgemischt wird, und das Sendesignal des Impulsradars und das Deramp-Signal mit demselben Referenzoszillator (LOa) erzeugt werden, **dadurch gekennzeichnet, dass** Sendesignal und Deramp-Signal als oberes und unteres Seitenband desselben Aufwärtsmischungsprozesses generiert werden.

2. Impulsradar nach Anspruch 1, **dadurch gekennzeichnet, dass** sowohl das obere wie auch das untere Seitenband als Sendesignal oder als Deramp-Signal eingesetzt werden können.

3. Impulsradar nach Anspruch 1 oder 2, **dadurch gekennzeichnet, dass** der Aufwärtsmischungsprozess derart eingerichtet ist, das entweder das Sendesignal oder das Deramp-Signal im Ku-Band zu liegen kommt, und das jeweils andere Signal im X-Band zu liegen kommt.

4. Linear frequenzmoduliertes Impulsradar, ausgebildet als Frequency Step System, bei dem die Bandbreite des Sendesignals durch zeitversetzte Generierung von mehreren frequenzmodulierten Sendesignalen unterschiedlicher Trägerfrequenz erhöht wird, und bei dem die Echosignale mit mehreren, den einzelnen Sendesignalen zugeordneten Deramp-Signalen zur Reduzierung der Bandbreite in der ZF-Ebene gegenüber dem Sendesignal abgemischt werden, **dadurch gekennzeichnet, dass** mehrere Referenzoszillatoren (LO1,LO2) vorhanden sind, wobei jeweils ein Sendesignal und das dem Sendesignal zugeordnete Deramp-Signal mit demselben Referenzoszillator (LO1,LO2) erzeugt werden, wobei Sendesignal und Deramp-Signal jeweils als oberes und unteres Seitenband desselben Aufwärtsmischungsprozesses generiert werden.

## Claims

1. Linear frequency-modulated pulsed radar, in which the echo signal is down-mixed with a deramp signal in order to reduce the bandwidth at the IF level in comparison to the transmitted signal, and the pulsed radar transmitted signal and the deramp signal are produced using the same reference oscillator (LOa), **characterized in that** the transmitted signal and the deramp signal are generated as an upper and a lower sideband of the same step-up mixing process.

2. Pulsed radar according to Claim 1, **characterized in that** both the upper and the lower sideband can be used as a transmitted signal or as a deramp signal.

3. Pulsed radar according to Claim 1 or 2, **characterized in that** the step-up mixing process is designed such that either the transmitted signal or the deramp signal is produced in Ku band, and the respective other signal is produced in X band.

4. Linear frequency-modulated pulsed radar, in the form of a frequency step system, in which the bandwidth of the transmitted signal is increased by time-offset generation of a plurality of frequency-modulated transmitted signals with a different carrier frequency, and in which the echo signals are down-mixed with a plurality of deramp signals, which are associated with the individual transmitted signals, in order to reduce the bandwidth at the IF level in comparison to the transmitted signal, **characterized in that** a plurality of reference oscillators (LO1, LO2) are provided each of which produces a transmitted signal and a deramp signal associated with the transmitted signal, using the same reference oscillator (LO1, LO2) with the transmitted signal and the deramp signal respectively being generated as the upper and lower sideband of the same step-up mixing process.

## Revendications

1. Radar pulsé modulé en fréquence linéaire, avec lequel le signal d'écho est mélangé avec un signal de deramp en vue de réduire la largeur de bande dans le plan des FI par rapport au signal émis et le signal émis du radar pulsé ainsi que le signal de deramp sont générés avec le même oscillateur de référence (LOa), **caractérisé en ce que** le signal émis et le signal de deramp sont générés sous la forme d'une bande latérale supérieure et inférieure du même processus de conversion/élévation.

2. Radar pulsé selon la revendication 1, **caractérisé en ce que** la bande latérale supérieure ainsi que la bande latérale inférieure peuvent toutes deux être utilisées comme signal émis ou comme signal de deramp.

3. Radar pulsé selon la revendication 1 ou 2, **caractérisé en ce que** le processus de conversion/élévation est configuré de telle sorte que le signal émis ou le signal de deramp se trouve dans la bande Ku et l'autre signal respectif se trouve dans la bande X.

4. Radar pulsé modulé en fréquence linéaire, réalisé sous la forme d'un système à pas de fréquence avec lequel la largeur de bande du signal émis est augmentée par une génération décalée dans le temps de plusieurs signaux émis modulés en fréquence à des fréquences porteuses différentes, et avec lequel les signaux d'écho sont mélangés avec plusieurs signaux de deramp associés aux signaux émis individuels en vue de réduire la largeur de bande dans le plan des FI par rapport au signal émis, **caractérisé en ce qu'**il existe plusieurs oscillateurs de référence (LO1, LO2), un signal émis et le signal de deramp associé au signal émis étant respectivement générés avec le même oscillateur de référence (LO1, LO2), le signal émis et le signal de deramp étant respectivement générés en tant que bande latérale supérieure et inférieure du même processus de conversion/élévation.
